# EUROPEAN PATENT SPECIFICATION

(11) **EP 3 056 990 B1**
(45) Date of publication and mention of the grant of the patent: **30.01.2019**
(21) Application number: 15189315.3
(22) Date of filing: 12.10.2015
(51) Int. Cl.: G06F 21/84, G09G 5/14, G09G 5/36, G06F 9/455, G06F 21/57, G06F 3/14

(54) **A MOBILE SYSTEM AND METHOD THEREOF FOR SECURE MULTIPLEXING OF GPU IN AN EMBEDDED SYSTEM**
MOBILES SYSTEM UND VERFAHREN ZUR SICHEREN MULTIPLEXIERUNG VON GPU IN EINEM EINGEBETTETEN SYSTEM
SYSTÈME MOBILE ET PROCÉDÉ ASSOCIÉ PERMETTANT DE SÉCURISER LE MULTIPLEXAGE DE GPU DANS UN SYSTÈME INTÉGRÉ

(30) Priority: 13.02.2015 DE 102015001925
(43) Date of publication of application: 17.08.2016
(73) Proprietor: Deutsche Telekom AG, 53113 Bonn (DE)
(72) Inventor: DANISEVSKIS, Janis, 10961 Berlin (DE); NORDHOLZ, Jan, 10585 Berlin (DE); VETTER, Julian, 10409 Berlin (DE); PETSCHICK, Matthias, 10783 Berlin (DE); PETER, Michael, 10551 Berlin (DE)
(74) Representative: Vossius & Partner Patentanwälte Rechtsanwälte mbB

(56) References cited:
- EP-A1- 2 747 071
- WO-A1-2013/091185
- US-A1- 2015 029 200

## Description

### Technical Field

The present invention relates to a system architecture and a method for providing access to graphics acceleration hardware to a mobile Virtual Machine (VM) as well as trusted and identifiable input and output path between a user and the virtual machine. It introduces a new mobile virtualization approach wherein either hardware or software of the Graphics Processing Unit (GPU) is configured to provide services to the virtual machines that conform to the resource allocation and protection policy. It provides the end-users of a mobile system the freedom of full control of the mobile system while at the same time mitigating the threat of malware infection that comes with the extensibility. It presents a mobile system with built-in protection policies to ensure that no information is leaked. The present invention improves GPU virtualization penalty on the performance, impact on the trusted computing base (TCB) thereby enabling the disclosed system architecture as a viable solution even for high security demands.

### Background of the invention

A mobile handset - smart phone or tablet - is used by a user both as personal and business phone. It therefore provides two or more environments, for example the business and the private environment. In the first (business) environment the user can access internal communication or documents that may be confidential. To protect corporate assets, a policy enforced in the corporate compartment may encompass the following provisions: 1. Restricted network access, e.g. all data communication must be routed through the corporate IT-infrastructure via a Virtual Private Network (VPN). 2. Restricted extensibility, e.g. the user can install no or only a restricted set of applications. 3. No flow of information to or from other environments on the same device.

The second environment is for personal use of the user and should be free of any restrictions. Therefore, provisions 1 and 2 above do not apply here. Provision 3 is redundant when the other environment is the business environment but its access should be up to the user otherwise and may well be desirable for privacy reasons.

Because of its open and extensible nature, the private environment is more prone to being infiltrated possibly by tricking the user into installing a Trojan horse. In such a manner the attacker, who is trying to subvert the policy of the other environment can take control of one of the environments.

Among many, there are three major categories of attacks that the attacker may mount on the non-compromised environment, namely spoofing, eavesdropping and evasion of isolation.

Spoofing refers to two very similar attacks with a subtle distinction. The first is a social engineering technique also known as phishing. The attacker presents a dialog on the screen that is familiar to the user thereby tricking the user into giving away confidential information such as login credentials.

The attacker could try to eavesdrop on the user input or output of the other environment. Malware that eavesdrops on user input is also known as a key logger. A prominent example - although not intended as malware - is the program Xeyes. It shows two eyes following the mouse pointer traveling across the screen. It works even if the program is not in focus which means it receives user input events (here mouse motion events) that were not intended for it.

Evading the isolation of the virtualized environment by gaining code execution outside the protection domain is the ultimate goal for an attacker. When this happens, all isolation, guarantees are null and void.

With the advent of Bring your Own Device (BYOD) at workplace, increasing number of users are accessing business applications and data from their mobile devices. Unlike its counterpart desktop virtualization, remote mobile virtualization is increasing exponentially.

However, due to lack of graphics acceleration support and security threats in current system architecture of mobile virtual machines, BYOD solutions have limited appeal.

Bring your own device (BYOD) poses the challenge of consolidating two seemingly contradictory philosophies on a single mobile handset. Private users expect to be in full control of their mobile device, benefiting from the extensibility that makes their smart phone smart. On the other hand, enterprises that issue smart phones to their employees are interested in mitigating the threat of a malware infection, which comes with the extensibility and may eventually yield information leakage.

To that end, they seek to enforce very strict policies, which are perceived as overly restrictive by the device owner.

Virtualization has been suggested as a solution to this quandary. Due to its isolation properties it is a suitable platform for providing multiple mutually distrusting environments that can enforce individual policies. As compared to desktop and server realm the user-experience of mobile devices hinges on their graphics output performance. The lack of virtualization solutions for graphics processing units (GPU) on mobile handsets, however, is an obstacle to wide adoption of virtualization for BYOD.

VMware as proposed in K. C. Barr, P. P. Bungale, S. Deasy, V. Gyuris, P. Hung, C. Newell, H. Tuch, and B. Zoppis. The vmware mobile virtualization platform: is that a hypervisor in your pocket? (Operating Systems Review, 44(4):124-135, 2010) is a mobile-hosted hypervisor solution based on Android/Linux. It features isolated Android domains for the fast deployment of enterprise applications and policy enforcement with a huge diversity of device drivers. For applications with high security demands, the concept is not well suited because it is unable to provide the resources needed for leisure and gaming in a cofined virtual machine and it exposes the host system to the hostile world of malware.

Cells as proposed by J. Andrus, C. Dall, A. V. Hof, O. Laadan, and J. Nieh. Cells: a virtual mobile smartphone architecture, pages 173-187 ACM, 2011 use Linux containers and a driver name-space concept to provide multiple run-time environments. It provides the user with multiple virtual phones by duplicating the user space software stacks sharing a single underlying kernel. This allows Cells to reuse device drivers with little or no modifications and consequently provides near unhampered graphics performance. Cells' virtual phones share has a large TCB due to the application of the Linux kernel and it has no secure label indicating the current environment to the user.

vNative proposed by Y. Dong, J. Mao, h. Guan, J. LI, and Y. Chen. A virtualization solution for byod with dynamic platform context switch. Micro, IEEE, PP(99):1-1, 2015 is a very recent addition to the realm of BYOD. It hosts multiple Android based VMs on a Xen hypervisor allowing full device pass-through to all VMs. The down side is that due to the pass-through based architecture only one so called foreground virtual machine can make progress at a time while background VMs are deprived of any computing resources.

Crossover described by M. Lange and S. Liebergeld. Crossover: secure and usable user interface for mobile devices with multiple isolated OS personalities, pages 249-257 ACM, 2013 demonstrate secure labeling and trusted path to the mobile BYOD use-case but it lacks the graphics acceleration.

A typical GPU driver architecture is a monolithic operating system kernel comprising a part of the driver and the application comprises a further part in the form of a library which provides a higher abstraction level (e.g. EGL/OpenGL ES). The kernel part has mainly two functions: temporal abstraction from the resource GPU (scheduling) and spatial abstraction. The spatial abstraction includes the building-up of separate contexts in the form of virtual address spaces that are maintained by a memory management unit (MMU) which controls the memory accesses of the GPU. This allows several applications to use the GPU without abandoning the spatial/memory isolation.

Further related technology is described in WO 2013/091185 A1, EP 2 747 071 A1, or US 2015/029200 A1.

### Summary of the invention

The invention is specified in the claims.

The present invention is aimed at the above-mentioned shortcomings and proposes an architecture covering secure GPU, framebuffer and input handling for mobile virtualized environments. This allows the mobile system to convey the identity of the virtual machine in the foreground to the user in manner resilient to forgery.

The invention relates to embedded systems in which CPU and GPU share a common main memory and which each comprise dedicated mechanism for protecting memory areas (memory management unit, also MMU).

The present invention provides a mobile system with a runtime environment supporting virtual machines, the mobile system comprising: a host with a physical memory and a physical address space, a central processing unit, CPU, a graphics-processing unit, GPU, with a GPU server, a stub driver, a frame buffer, a display controller, and a screen, the CPU, GPU and display controller sharing access to a common physical memory; a frame buffer switch, an input switch, an input driver, a display controller driver, and a policy master keeping the frame buffer switch and the input switch in synchronization; at least one instance of a virtual machine, VM; a plurality of applications running on the virtual machine; a hypervisor supporting the virtual machine; wherein a portion of the physical memory of the host is assigned to each virtual machine; wherein the GPU is paravirtualized for sharing the GPU hardware between the virtual machines; wherein the physical memory of a virtual machine is mapped to the assigned region of the physical memory of the host; wherein the GPU is adapted for providing a trusted path from the virtual machine to the screen, the trusted path being established by the private nature of passing client framebuffers from the virtual machine to the screen, wherein a framebuffer switch maintains a session with each of a number of clients, such that one of these sessions is active in accordance with a respective protection policy, and wherein an input switch passes input events to the active client in accordance with said policy; wherein access to the common physical memory by the CPU and the GPU is mediated by individual memory management units, MMUs; wherein the stub driver communicates with the GPU-server via a communication channel that is controlled by the hypervisor; wherein the GPU server is adapted to construct a page table that maps the GPU address space directly to the physical address space of the host; and wherein the stub driver of a virtual machine being a client forwards every mapping request to the GPU-server, which, in turn, constructs a page table for the virtual machine on the client's behalf.

According to a preferred embodiment, either hardware or software of the GPU is configured to provide services to the at least one virtual machine that conform to a resource allocation and protection policy.

The system further comprises a framebuffer switch, an input switch, an input driver, a display controller driver, and a policy master.

According to a preferred embodiment, the GPU server is configured to deploy a quota mechanism to restrict the amount of secondary memory that a client can use for page tables on the server side.

According to a preferred embodiment, the display controller driver has no access to the contents of the frame buffer of the virtual machine.

The GPU-server is adapted to construct a page table for a client.

According to a preferred embodiment, the system further comprises a guest page table on the client side, wherein the GPU server derives an effective page table for the next job from the corresponding guest page table on demand.

According to a preferred embodiment, the system further comprising a labeling mechanism for allowing the user of the mobile system to identify the origin of the content.

According to a preferred embodiment, the identiflabilty of the trusted path to virtual machine relies on whether or not input switch and framebuffer switch received the same policy decision announcement.

The system further comprises a stub driver that is adapted to forward every mapping request to the GPU-server.

According to another aspect, the invention provides a computer-implemented method for a mobile system comprising a host with a physical memory and a physical address space, a central processing unit, CPU, a graphics-processing unit, GPU, with a GPU server, a stub driver, a frame buffer, a display controller, a screen, and a runtime environment supporting virtual machines, a hypervisor supporting the virtual machine, the stub driver communicating with the GPU-server via a communication channel that is controlled by the hypervisor, the CPU, GPU and display controller sharing access to a common physical memory, a frame buffer switch, an input switch, an input driver, a display controller driver, and a policy master keeping the frame buffer switch and the input switch in synchronization; the method comprising the steps of: assigning each virtual machine a portion of the physical memory of the host; paravirtualizing the GPU for sharing the GPU hardware between the virtual machines; mapping the physical memory of a virtual machine to the assigned region of the physical memory of the host; mediating access to the common physical memory by the CPU and the GPU by individual memory management units, MMUs creating a trusted path from the virtual machine to the screen, the trusted path being established by the private nature of passing client framebuffers from the virtual machine to the screen, wherein a framebuffer switch maintains a session with each of a number of clients, such that one of these sessions is active in accordance with a respective protection policy, and wherein an input switch passes input events to the active client in accordance with said policy; and constructing, by the GPU server, a page table that maps the GPU address space directly to the physical address space of the host; the stub driver of a virtual machine being a client forwarding every mapping request to the GPU-server, which, in turn, constructs a page table for the virtual machine on the client's behalf.

According to another aspect, the invention provides computer program adapted to perform method according to the invention.

### Brief description of the figures

The present invention will be explained in detail with the accompanying figures in which:
- Fig. 1a: shows a generic system according to the present invention;
- Fig. 1b: shows the output of two different virtual machines on the same device;
- Fig. 2a: shows a client server split according to the present invention;
- Fig. 2b: shows a Smartphone's screen partitioned in to label and client region (left), the framebuffer switch (middle) and two client VMs (right);
- Fig. 2c: shows a communication between client, server and GPU;
- Fig. 3a: shows system architecture of a type 1 hypervisor;
- Fig. 3b: shows system architecture of a type 2 hypervisor;
- Fig. 3c: shows a Multi Server Architecture;
- Fig. 4a: shows a client in a guest kernel of a virtual machine of a type 1 hypervisor;
- Fig. 4b: shows a client in guest kernel of a virtual machine of a type 2 hypervisor;
- Fig. 4c: shows a client as part of an application;
- Fig. 4d: shows a client as a standalone program, which serves other applications;
- Fig. 5a: shows a server as a user application of virtual machine of a type 1 hypervisor;
- Fig. 5b: shows a server as a kernel module of virtual machine of a type 1 hypervisor;
- Fig. 5c: shows a server integrated in a host kernel;
- Fig. 5d: shows a server as a computer implemented method that runs on the virtualizing interface of a type 1 hypervisor;
- Fig. 5e: shows a server as a user application of a host kernel;
- Fig. 6a: shows a server as a user application of a virtual machine of a type 2 hypervisor;
- Fig. 6b: shows a server as a kernel module of a virtual machine of a type 2 hypervisor;
- Fig. 6c: shows a server as a computer implemented method that runs on the virtualizing layer of a type 2 hypervisor;
- Fig. 6d: shows a server integrated in a type 2 hypervisor;
- Fig. 7: the architecture of a preferred embodiment of the present invention;
- Fig. 8: shows the GPU-Server (middle) running as user space application serving two client VMs (left/right) on top of hypervisor or microkernel;
- Fig. 9: shows a schematic for generation of the context for building virtual address space;
- Fig. 10: shows a schematic for destruction of the context;
- Fig. 11: shows a schematic for setting up a mapping; and
- Fig. 12: shows a schematic for releasing a mapping.

### Detailed description of the invention

The invention relates to computer systems which aim at a high level of isolation between system components without mutual confidence. These systems include, e.g., multi-personality systems. The latter are mobile devices on which several user environments, which are intended for different fields of application, e.g. private and business, are running simultaneously.

Technologies which are used for this purpose can be divided in four categories:
1. virtualization with type-1 hypervisor
2. virtualization with type-2 hypervisor
3. decomposed
4. OS virtualization

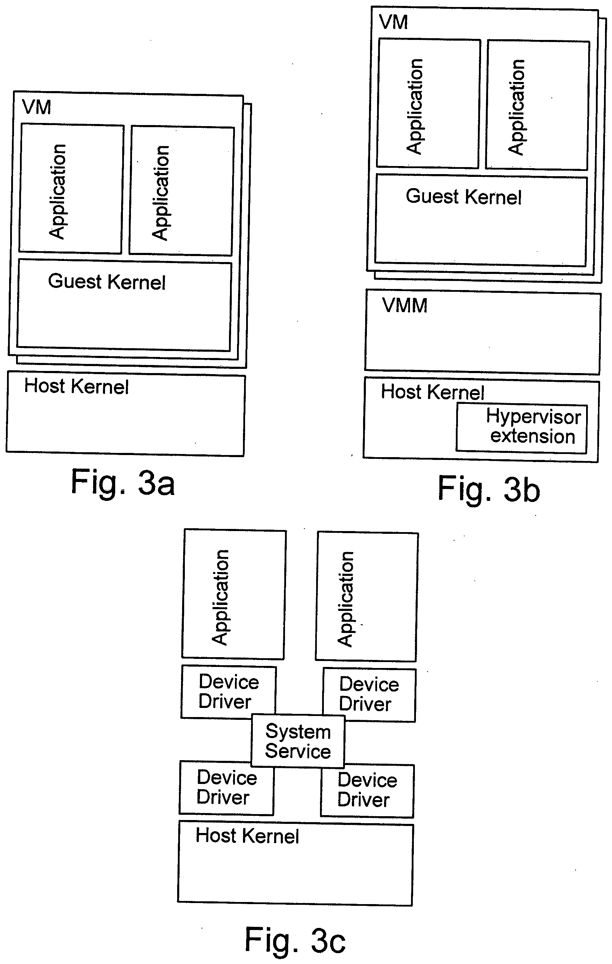

In categories 1 and 2, complete operating systems (guest systems) including the operating system kernel are executed in a virtualized runtime environment (virtual machine). The differentiation between type-1 and type-2 is due to the localization of the hypervisor (also virtual machine monitor or VMM), the component which controls the execution of the VMs. In type-1, this component lies in the kernel of the host system, in type-2 in the user space (user-space or non-privileged mode) of the host system. The different locations are visualized in Figs. 3a and 3b, respectively. In category 3, the host kernel offers substantially spatially separated runtime environments and highly controlled communication mechanisms. Kernel, drivers among each other, as well as the user applications are clearly separated from each other, which allows the formation of minimal and individual TCBs. This is shown in Fig. 3c. In category 4, the kernel of the host system provides virtualized runtime environments or name spaces, which correspond to the kernel/user interface of the non-virtualized system. In these runtime environments, the non-privileged part of the guest system is executed without further guest kernel.

The present invention discloses an architecture covering secure GPU, framebuffers and input handling for mobile virtualized environments. This approach allows to convey the identity of the virtual machine (VM) in the foreground to the user in a manner resilient to forgery.

More particularly, the present invention relates to an embedded system in which CPU and GPU share a common primary storage that is secured through Memory Management Unit (MMU). The present invention discloses a dependable mechanism to share these resources between two or more VMs thereby labeling the output at all times.

Graphical user interfaces (GUI) for virtualized environments on mobile handsets differs from GUIs in the desktop domain. Handsets are constrained in memory, computing capabilities, energy consumption and screen size. Moreover, the concept of a windowing system has proven impractical on mobile devices. The present invention therefore focuses on an efficient scheme that allows one virtualized environment to take possession of the screen at a time. This implementation keeps performance impact to a minimum while making no compromises on isolation and thus security.

GPU virtualization is not classical device virtualization. From a virtualization point of view, GPUs behave much more like CPUs. They are highly programmable devices that fetch their programs from memory which even in non-virtualized environments, come from mutually distrusting entities. And they can quite freely read from and write to any region of the physical memory they can access which, just like on a CPU is governed by a memory management unit (MMU). Therefore, these access restrictions must be administered with great care to prevent an attacker from evading a protection domain by means of the GPU. When virtualizing CPUs without support for memory management virtualization (e.g. nested paging), one needs to resort to shadow paging (see K. Adams and O. Agesen. A comparison of software and hardware techniques for x86 virtualization, pages 2-13 ACM, 2006). This leads to considerable overhead because CPU page tables are highly dynamic and are usually populated lazily.

An architecture such as the one disclosed by the present invention requires the runtime environment that supports the virtual machines. The system must have a trusted boot procedure that gives the VMs a persistent notion of identity and integrity. It shall also provide a means for inter virtual machine communication with low latency. The bandwidth of these channels does not need to be high, in fact, a low latency notification mechanism, such as virtual interrupts, suffices, if shared memory regions across VMs are available. Each virtual machine is assigned a portion of physical memory called "guest" physical memory. The virtualization layer maps each guest's physical memory to a region of host physical memory assigned to that guest. Depending on the platform capabilities, the mapping is either performed in hardware (nested page tables) or software (shadow page tables).

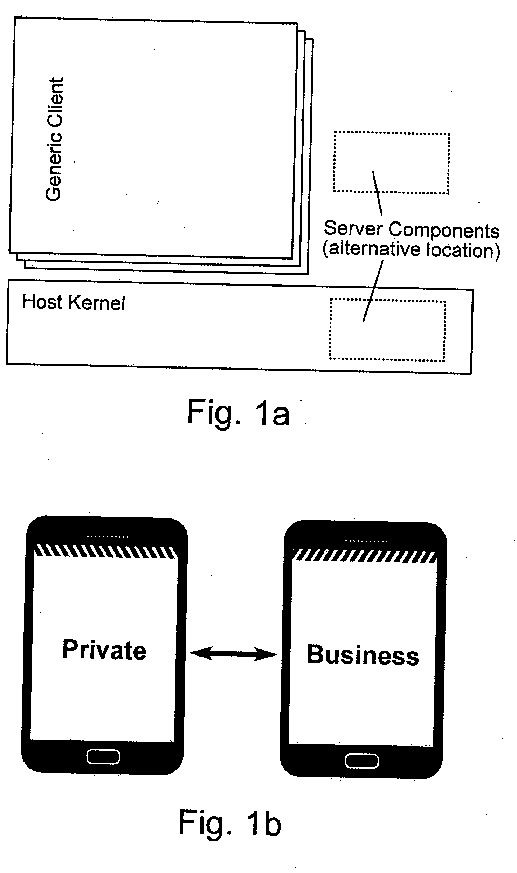

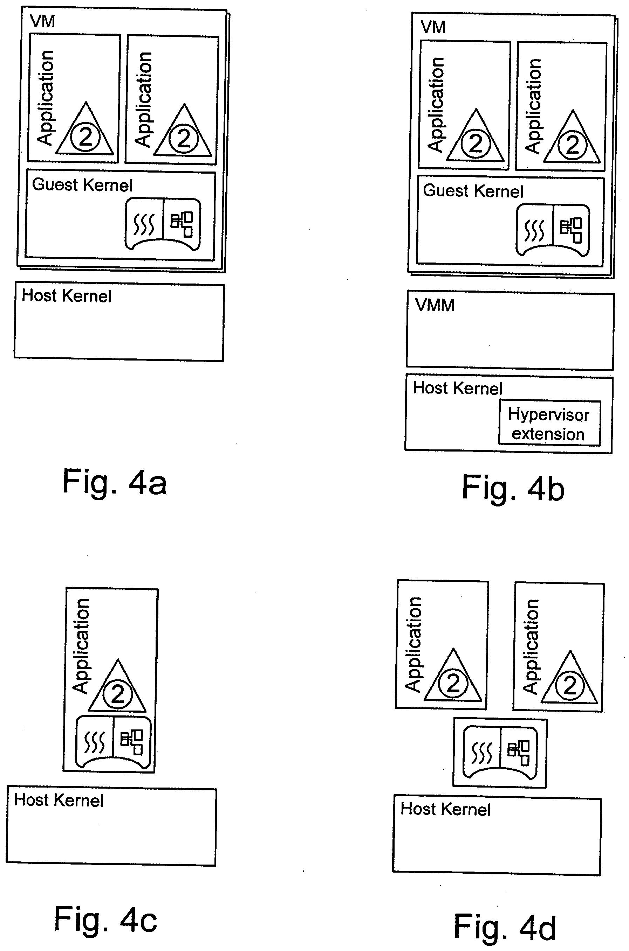

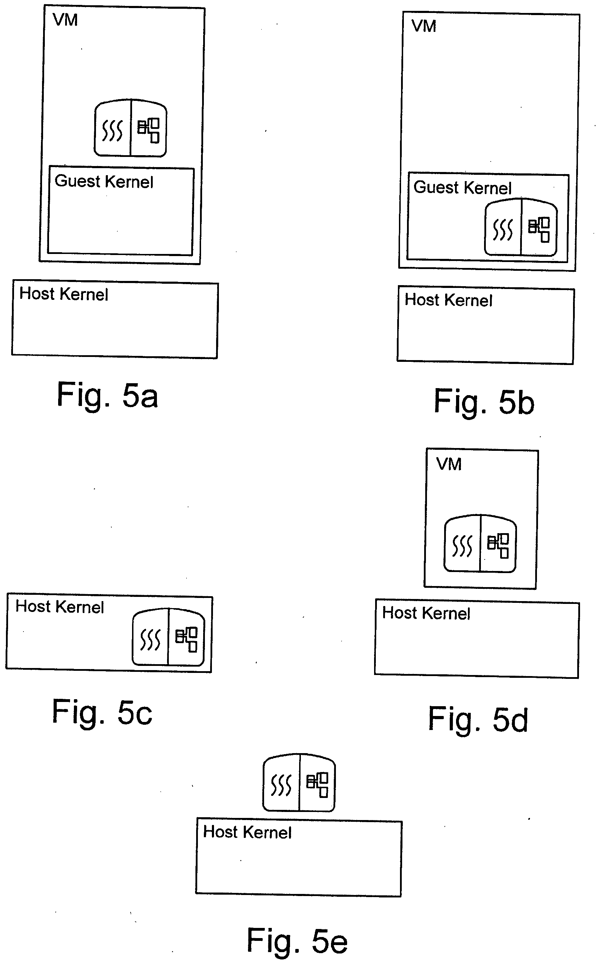

Fig. 1 shows a generic system using the present invention. In this system, the generic clients are selected from the variants that are shown in Figs. 4a to 4d described below, and the server components are selected from the variants that are shown in Figs. 5a to 6d described below. The server communicates with the clients according to one of the protocols also described below.

Fig. 1b shows a mobile system typically with a touch screen and a few mechanical buttons. A display controller drives the screen. It scans a framebuffer that it interprets as a map of color values that in turn it feeds to the screen. In particular, Fig. 1b shows the output of two different virtual machines on the same device. A label at the top of the screen, indicating the origin of the rendition in the client area below, is provided by the system and cannot be changed by the client virtual machine.

The frame-buffer is a region of memory that holds a bitmap of coded color values, periodically and sends the color values to the screen. Each virtual machine has its own framebuffer, to which it renders its output, and it is the responsibility of the virtualization layer to arrange for the display controller to receive the output of the currently visible virtual machine. If multiple virtual machines share a screen, it may not be apparent to the user which screen is currently visible. To counter spoofing attacks, a way is needed to inform the user about which virtual environment she is interacting with. This could be done via special hardware such as a multicolor LED or a label on the screen.

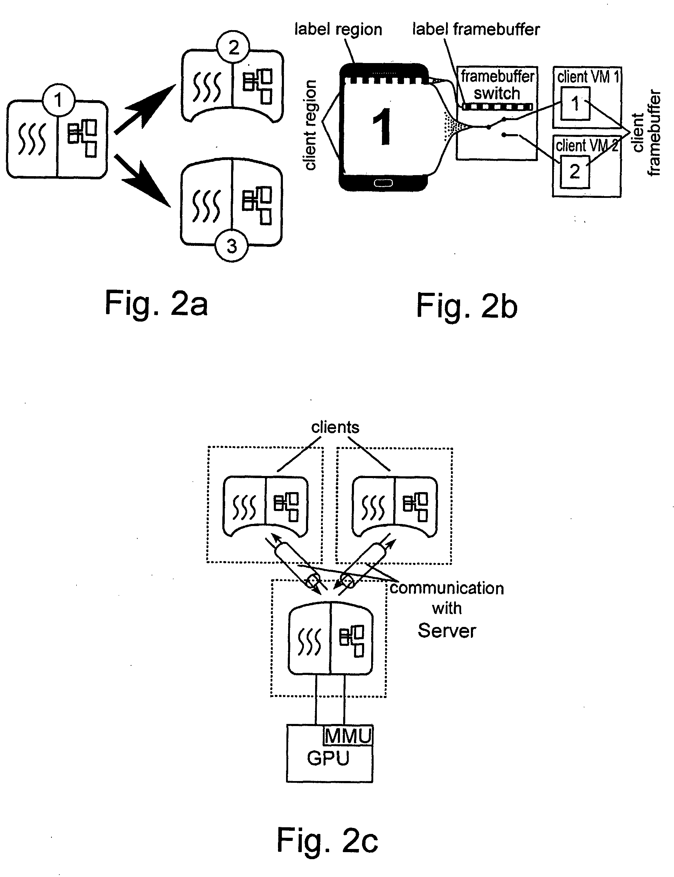

The invention relates to the secure multiplexing of GPU resources between virtualized runtime environments in embedded systems. As shown in Fig. 2a, in contrast to the prior art, the kernel part of the GPU driver is divided in a client part and a server part employing paravirtualization. The client part provides the same interface as the kernel part. It provides local scheduling and allows the application of contexts and their population. The client part can be localized as well, as shown in Figs. 4a to 4d.

Fig. 2b shows, by way of example, the screen of a mobile device partitioned in to label and client region (left), the framebuffer switch (middle), and two client virtual machines (right). The label could be color-coded, a string of characters, or a geometric pattern, but most importantly it must never be forgeable or manipulatable by any of the virtual environments. The invention partitions the screen into two logical regions namely the label region and the client region.

Fig. 2c visualizes communication between the clients, the server and the GPU.

Preventing eavesdropping is more a technical rather than a user interface design issue. The system itself must be designed such that input events are only ever reported to the virtual environment indicated by the label rather than to anyone who requests them. The same is true for the output path. Crosstalk on the output path that could result from, e.g., sharing a common framebuffer must be eliminated at all cost. A weak potential exists for isolation evasion in the handling of framebuffer and input events because both related hardware components display controller and touchscreen do not typically use direct memory access (DMA) for writing memory. It is conceivable however that an attacker who gains control over the display controller redirects the scanout region such that memory that contains secret key material is send to the screen where it can be recovered with a camera.

According to the invention, the hardware implementation has three main components. One is the CPU, or multiple CPUs for that matter. Furthermore, there are a GPU, and a display controller. All three share access to a common piece of physical memory. Access to this memory by the CPUs and the GPU, at least, is mediated by individual memory management units (MMUs), as shown in Fig. 2c. The display controller must support at least two scanout regions or overlays that can be configured to service different parts of the screen.

Figs. 4a to 4d show alternative locations of a client according to embodiments of the present invention. As shown in Fig. 4a, the client may be located in the guest kernel of a virtual machine of a type 1 hypervisors. Fig.4b shows a client in a guest kernel of a virtual machine of a type 2 hypervisor. Fig.4c shows a client as part of an application. Fig. 4d shows a client decomposed as a standalone program, which serves other applications.

Figs. 5a to 5e show server variants. The server is adapted to take care of global scheduling from GPU tasks and to protect the context. The server can be realized in various ways. Fig. 5a shows a server as a user application of virtual machine of on a type 1 hypervisor. Fig. 5b shows a server as a kernel module of virtual machine on a type 1 hypervisor. Fig. 5c shows a server integrated in host Kernel. Fig.5d shows a server as a computer implemented method that runs on the virtualizing interface of a type 1 hypervisors. Fig.5e shows a server as a user application on a host kernel.

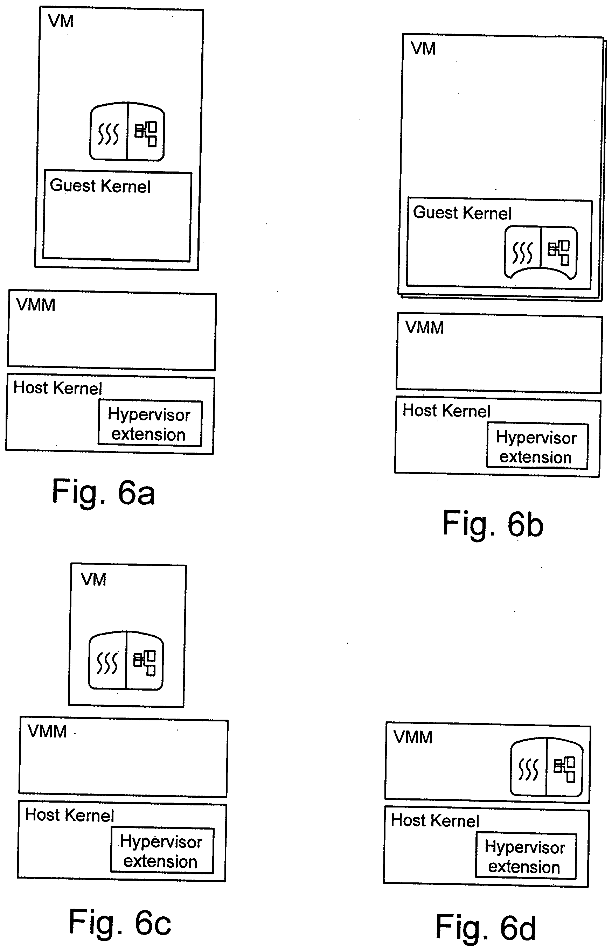

Figs. 6a to 6d show other alternatives of the server. Fig. 6a shows a server as a user application of a virtual machine of a type 2 hypervisor. Fig. 6b shows a server as a kernel module of a virtual machine of type 2 hypervisor. Fig. 6c shows a server as a computer implemented method that runs on the virtualizing layer of a type 2 hypervisor. Fig. 6d shows a server integrated in a type 2 hypervisor.

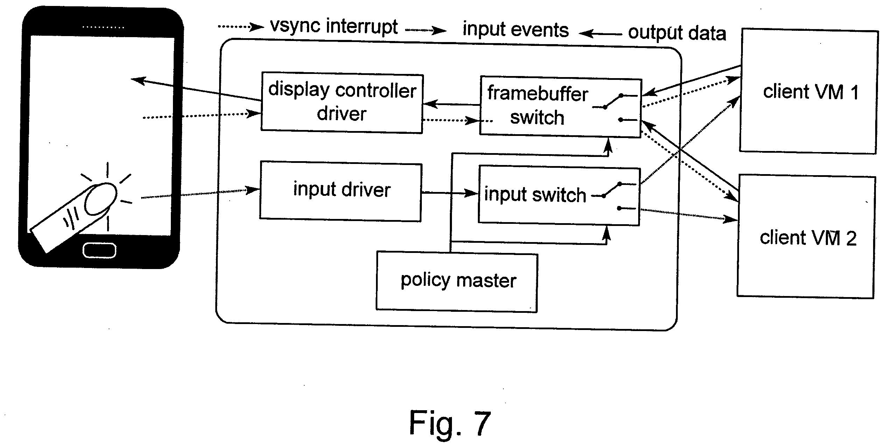

Figure 7 shows the architecture of a preferred embodiment of the present invention. In particular, Fig. 7 shows the I/O switching architecture with all five components (middle) in the context of the (touch) screen as (input)output device (left) and two client VMs (right). As depicted, the architecture comprises two device drivers, one driving the display controller and one driving the input device, that is the touch screen and the buttons of the mobile device. Furthermore, there are two switches for policy enforcement for graphical output and input events respectively. Finally, there is a policy master. The switching components rely on the service of their respective drivers and in turn provide similar services to their clients. The clients are the virtual machines VM1 and VM2. Additionally the switching components provide an interface to allow setting of the policy decision. It is important to note that the switchers do not make policy decisions rather they guarantee their enforcement.

The display controller driver provides an abstraction of the screen. Thereby it partitions the screen into two logical regions, the label region and the client region, as explained above. Using the display controller support for multiple scan-out regions or overlays, each of the regions may be backed by different framebuffers. The driver offers a service to attach arbitrary buffers to the logical screen regions and to retrieve information about the regions geometry and pixel layout. The framebuffer switch relies on the service of the display controller driver. It attaches a label framebuffer of its own to the label region. It draws a label into this framebuffer indicating the current policy decision.

To enforce policy, the framebuffer switch maintains a session associated with each client. One of these sessions may be active in accordance with the policy decision it receives via its policy interface. Clients use the service of the framebuffer switch to set their active framebuffer. Switching between multiple buffers is easily possible, allowing for the straight forward implementation of double buffering. To announce a buffer, clients communicate the guest physical address range of it to the framebuffer switch which knows how to map it to a host physical address for a given client. The framebuffer switch can then by means of the display controller driver attach the active client's announced framebuffer to the client region.

The display controller's capabilities of laying out a limited set of buffers on the screen is being exploited for offloading compositing work from the GPU. By using one of these overlays for a secure label, the invention limits the number of those that the client can use by one. One cannot expect the same number of overlays to be supported on all hardware platforms, it can flexibly compensate for the loss by using the GPU. Possibly remaining overlays can be made available with the approach of the present invention. The display controller generates a vsync interrupt on the start of the vertical sync gap. The display controller driver, which owns the device and receives that interrupt, forwards it to the framebuffer switch which, in turn, passes it on to the active client. Making this information available to the client is important because some operating systems use it to coordinate its rendering activities.

The present invention accomplishes two goals. First, there is a trusted path due to the private nature of the client framebuffers from the virtual machine to the screen. Secondly, due to the labeling mechanism the user can identify the origin of the content. What is more is that neither the driver nor the switcher need access to the content of client framebuffer itself. There is no expensive copying of high bandwidth data, e.g. image data, necessary. And combining the label with the client output is done by the display controller and is thus offloaded from the CPU.

Input driver and input switcher are designed analogous to the display controller driver and the framebuffers switch. The input driver drives the touch screen and mechanical buttons of the device. In turn the switcher relies on the input driver's service to receive input events. It enforces a given policy by passing input events on to the client that is active according to the current policy decision.

The input switcher can raise a secure attention event if it detects a secure attention sequence or a gesture issued by the user. This event is never passed on to a client but rather to a policy decision maker. This policy decision maker could now switch input and output to the next virtual machine or, instead, direct input and output to itself and present the user with a dialog.

The identifiabilty for the trusted path from the input devices to the virtual machine relies on whether or not input switch and framebuffers switch received the same policy decision announcement. The present invention therefore introduces the policy master that has the sole purpose of keeping the both switchers in sync.

A typical mobile GPU driver stack comprises a user part. The user part of the driver translates high-level API-calls - such as OpenGL - into the instruction set of the GPU. It uses the kernel/user interface of the kernel part to populate a GPU context with a job for the GPU to run and to subsequently start execution of the job.

A GPU context or GPU-address-space is a virtual address space upheld by an MMU that mediates memory accesses by the GPU. Every application requesting to use the GPU gets its own GPU-address-space just as it gets its own process address space on the CPU.

GPU drivers assemble and layout the jobs in memory and populate the corresponding context accordingly prior to starting the job on the GPU. Unlike process page tables, GPU page tables are not populated lazily. This static behavior is well suited for applying shadow paging to GPUs without the performance overhead that comes with handling address space dynamics.

To populate this address space with actual physical memory, the application, by means of the kernel-user interface allocates physical memory buffers and maps them into its own process address-space as well as into the GPU-address-space. It then lays out the job in memory by means of the process mappings such that it forms a consistent executable job in the GPU-address-space. To comply with the requests of the application, the kernel driver constructs a page table that expresses a mapping from the GPU-address-space of the application to physical addresses. When the application requests to start a job, the kernel driver activates the corresponding page table on the GPU's MMU and passes user supplied information about the job layout on to the GPU.

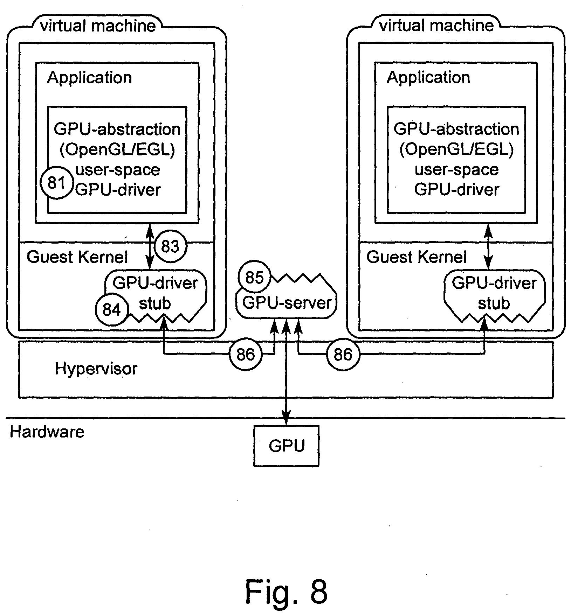

Fig. 8 shows the approach of the present invention in providing mobile virtual machines with access to graphics computing resources. Note that as the mobile operating system moved into a virtual machine the kernel-user interface 83 remains unaltered and so does the user part 81 of the driver. The hardware facing part of the kernel driver was replaced by a stub 84 that communicates with the GPU-server 85 via a communication channel 86 that is controlled by the underlying hypervisor. The GPU-server, which exercises full control over the GPU, including its MMU, may be a native user space application - if the hypervisor supports those - -or run inside a virtual machine.

The GPU-server 85 allows the creation of contexts just as the kernel driver did before. In fact, it allows the creation of multiple contexts per client on which the guest-kernel drivers can map their client's contexts. For starting jobs, the stub driver simply passes the user supplied information on to the GPU-server, which in turn activates the corresponding context and starts the job on the GPU. That is, if the GPU is idle, otherwise the job is being queued.

Complications arise when building the GPU context because what a virtual machine considers physical memory is in fact just another address space, the guest physical address space, adding another level of translation. However, the MMU of the GPU does not have this expressive power. Therefore, the GPU-server must construct a page table that maps directly from the GPU-address-space to the host physical address-space. This technique is called shadow paging (see K. Adams and O. Agesen. A comparison of software and hardware techniques for x86 virtualization, pages 2-13 ACM, 2006), and is widely applied in virtualization if the underlying hardware does not support multiple layers of translation. The mapping target is expressed in terms of guest physical addresses and eventually the GPU-server, which knows how guest physical addresses are mapped to host physical ones for a given client, constructs the effective page tables.

All information related to GPU-jobs that comes from the user space must be considered to be not trustworthy. Sanitizing this user supplied information, however, is not required as the GPU's MMU tames all memory accesses by the GPU.

The GPU shadow paging implementation of the present invention unlike in typical shadow paging, does not have the stub driver of the client create guest page tables; rather it forwards every mapping request to the GPU-server, which, in turn, constructs a page table on the clients behalf. This saves memory on the client side but of course the memory must be accounted for to prevent denial of service. Therefore, a quota mechanism restricts the amount of secondary memory that a client can use for page tables on the server side.

In an alternative embodiment it would be possible to keep the guest page tables on the client side. The GPU-server would then derive the effective page table for the next job from the corresponding guest page table on demand. This scheme would restrict the secondary memory consumption on the server side to one page table, but it would incur undesirable runtime overhead upon a context switch.

The methods for secure mapping to global system resources (physical addresses) are described in the following. When building up the virtual address spaces for the GPU, it is assured that that the client does not gain access to resources that it does not already control. This is achieved by forming an individual, abstract name space for each client, by means of which the resources can be named. For allowing the trustworthy GPU server to map these name spaces to the physical resources, it receives all information necessary for the translation, or, in particular, in case of dynamic systems, a trustworthy third party available to the GPU server carries out the translation.

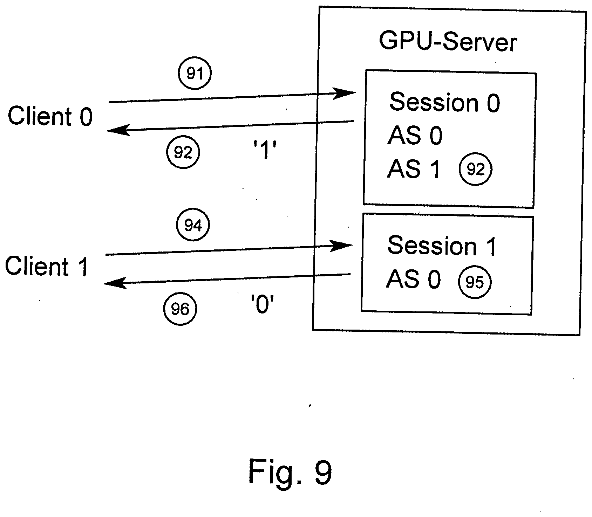

Fig. 9 shows the structure of the virtual address spaces governed by protocol relating to context generation. In step 91, client 0 sends a request for generating a context. In step 92, the GPU server allocates the resources for a new context for the client. In step 93, the GPU server sends the ID of the new context back to the client. It is to be noted that the context IDs have client-local coverage because the identity of the client is guaranteed via the communication channel. Steps 94 to 96 correspond to steps 91 to 93 but should clarify the local nature of the context ID.

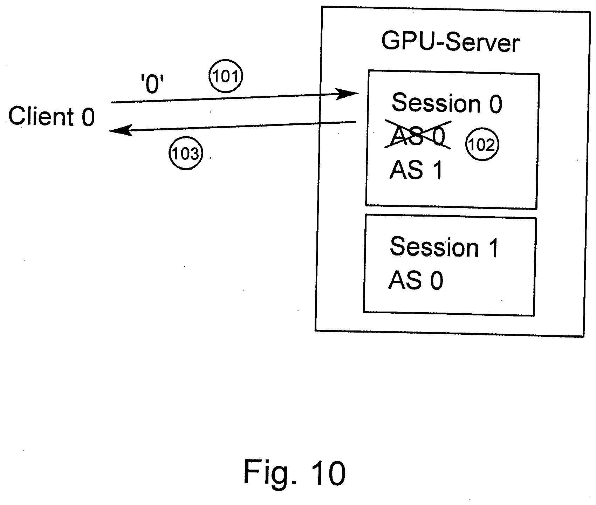

Figure 10 shows the steps involved in context destruction. In step 101, client 0 sends a request for destruction of a context and simultaneously transmits the related context ID. In step 102, the GPU server releases the resources of the related context. Optionally in step 103, the GPU server sends a confirmation back to the client.

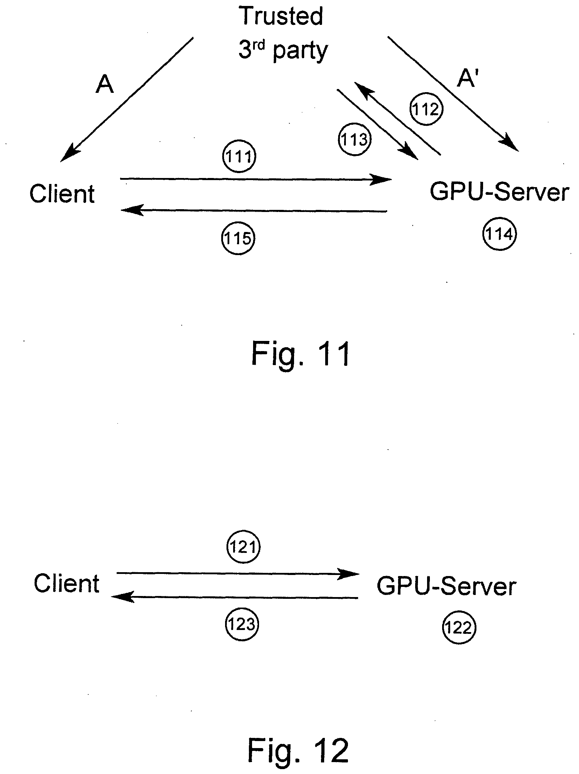

Figure 11 illustrates the steps involved in setting up a mapping. In step 111, the client sends a request for setting up a mapping. The request comprises the context ID, the resource to be mapped and the destination of the mapping. The resource to the mapped is specified by means of an individual, abstract name space which is only valid within the relation between client and server. In step 112, the GPU server sends a request to a trustworthy third party. This request comprises the abstract name of the resource. In step 113, the trustworthy third party responds with the actual name of the resource (physical address) if the abstract name is valid. The trustworthy third party answers with an error code if the abstract name is not valid. Step 114: Only if Step 113 was successful, then the GPU server modifies the mentioned context of the client session with the requested mapping. Step 115: The GPU server answers with a success code if 113 was successful or with an error code if 113 was not successful.

Figure 12 depicts the releasing of a mapping. In step 121, the client sends a request for removing a mapping. The request comprises the context ID and the destination of the mapping. In step 122, the GPU server removes the mentioned mapping from the mentioned context in case said mapping exists. In step 123, the GPU server reports execution. Optionally, an error code can be sent as response.

However, this is not necessary because the post condition is in any case: "The mentioned mapping does not exist."

In the invention, it is assumed that commands are processed by the client in the main memory of the embedded system. These commands can be achieved by the GPU in the respective main memory. The invention includes that the following protocol about process limits is made between a client and the GPU server. (A) The client sends a request for starting a command. The request comprises the ID of the respective context as well as the entire information needed by the GPU for finding the command within the context, as well as optionally information for assigning the command to specific resources of the GPU. (B) The GPU server uses a process planning method based on which the command is executed on the GPU. (C) After completion of the command processing, the GPU server notifies the client about the state of the command processing.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

## Claims

1. A mobile system with a runtime environment supporting virtual machines, the mobile system comprising:
a host with a physical memory and a physical address space, a central processing unit, CPU, a graphics-processing unit, GPU, with a GPU server (85), a stub driver (84), a frame buffer, a display controller, and a screen, the CPU, GPU and display controller sharing access to a common physical memory;
a frame buffer switch, an input switch, an input driver, a display controller driver, and a policy master keeping the frame buffer switch and the input switch in synchronization;
at least one instance of a virtual machine, VM;
a plurality of applications running on the virtual machine;
a hypervisor supporting the virtual machine;
wherein a portion of the physical memory of the host is assigned to each virtual machine;
wherein the GPU is paravirtualized for sharing the GPU hardware between the virtual machines;
wherein the physical memory of a virtual machine is mapped to the assigned region of the physical memory of the host;
wherein the GPU is adapted for providing a trusted path from the virtual machine to the screen, the trusted path being established by the private nature of passing client framebuffers from the virtual machine to the screen, wherein a framebuffer switch maintains a session with each of a number of clients, such that one of these sessions is active in accordance with a respective protection policy, and wherein an input switch passes input events to the active client in accordance with said policy;
wherein access to the common physical memory by the CPU and the GPU is mediated by individual memory management units, MMUs;
wherein the stub driver (84) communicates with the GPU-server (85) via a communication channel (86) that is controlled by the hypervisor;
wherein the GPU server (85) is adapted to construct a page table that maps the GPU address space directly to the physical address space of the host; and
wherein the stub driver (84) of a virtual machine being a client forwards every mapping request to the GPU-server (85), which, in turn, constructs a page table for the virtual machine on the client's behalf.

2. The mobile system according to claim 1, wherein either hardware or software of the GPU is configured to provide services to the at least one virtual machine based on a resource allocation and protection policy.

3. The mobile system according to claim 1, or 2, wherein the GPU server is configured to deploy a quota mechanism to restricts the amount of secondary memory that a client can use for page tables on the server side.

4. The mobile system according any one of claims 1 to 3, wherein the display controller driver has no access to the contents of the frame buffer of the virtual machine.

5. The mobile system according to any one of claims 1 to 4, further comprising a guest page table on the client side, wherein the GPU server derives an effective page table for the next job from the corresponding guest page table on demand.

6. The mobile system according to any one of claims 1 to 5, further comprising a labeling mechanism for allowing the user of the mobile system to identify the origin of the content.

7. The mobile system according to claim 5 or 6, wherein the identifiabilty of the trusted path to virtual machine relies on whether or not input switch and framebuffer switch received the same policy decision announcement.

8. A computer-implemented method for a mobile system comprising
a host with a physical memory and a physical address space,
a central processing unit, CPU, a graphics-processing unit, GPU, with a GPU server (85), a stub driver (84), a frame buffer, a display controller, a screen, and a runtime environment supporting virtual machines, a hypervisor supporting the virtual machine,
the stub driver (84) communicating with the GPU-server (85) via a communication channel (86) that is controlled by the hypervisor,
the CPU, GPU and display controller sharing access to a common physical memory,
a frame buffer switch, an input switch, an input driver, a display controller driver, and a policy master keeping the frame buffer switch and the input switch in synchronization;
the method comprising the steps of:
assigning each virtual machine a portion of the physical memory of the host;
paravirtualizing the GPU for sharing the GPU hardware between the virtual machines;
mapping the physical memory of a virtual machine to the assigned region of the physical memory of the host;
mediating access to the common physical memory by the CPU and the GPU by individual memory management units, MMUs
creating a trusted path from the virtual machine to the screen, the trusted path being established by the private nature of passing client framebuffers from the virtual machine to the screen, wherein a framebuffer switch maintains a session with each of a number of clients, such that one of these sessions is active in accordance with a respective protection policy, and wherein an input switch passes input events to the active client in accordance with said policy; and
constructing, by the GPU server (85), a page table that maps the GPU address space directly to the physical address space of the host;
the stub driver (84) of a virtual machine being a client forwarding every mapping request to the GPU-server (85), which, in turn, constructs a page table for the virtual machine on the client's behalf.

9. The computer-implemented method according to claim 8, wherein either hardware or software of the GPU is configured to provide services to the at least one virtual machine based on a resource allocation and protection policy.

10. The computer-implemented method of claim 8 or 9, wherein the display controller driver has no access to the contents of the frame buffer of the virtual machine.

11. A computer program adapted to perform method according to any one of claims 8 to 10.

## Patentansprüche

1. Mobiles System mit einer Laufzeitumgebung, die virtuelle Maschinen unterstützt, wobei das mobile System aufweist:
einen Host mit einem physikalischen Speicher und einem physikalischen Adressraum, eine zentrale Verarbeitungseinheit, CPU, einen Grafikprozessor, GPU, mit einem GPU-Server (85), einen Stub-Treiber (84), einen Bildspeicher, einen Anzeigekontroller und einen Bildschirm, wobei die CPU, die GPU und der Anzeigekontroller einen gemeinsamen physikalischen Speicher gemeinsam nutzen;
einen Bildspeicherumschalter, einen Eingabeumschalter, einen Eingabetreiber, einen Anzeigekontrollertreiber und einen Richtlinienmaster der den Bildspeicherumschalter und den Eingabeumschalter synchronisiert hält;
mindestens eine Instanz einer virtuellen Maschine, VM;
eine Vielzahl von Anwendungen, die auf der virtuellen Maschine ausgeführt werden; einen Hypervisor, der die virtuelle Maschine unterstützt;
wobei ein Abschnitt des physikalischen Speichers des Hosts jeder virtuellen Maschine zugeordnet ist;
wobei die GPU zur gemeinsamen Nutzung der GPU-Hardware durch die virtuellen Maschinen paravirtualisiert wird;
wobei der physikalische Speicher einer virtuellen Maschine auf den zugeordneten Bereich des physikalischen Speichers des Hosts abgebildet ist;
wobei die GPU zum Bereitstellen eines vertrauenswürdigen Wegs von der virtuellen Maschine zum Bildschirm eingerichtet ist, wobei der vertrauenswürdige Weg durch die vertrauliche Eigenschaft des Schickens von Client-Bildspeichern von der virtuellen Maschine zum Bildschirm hergestellt wird, wobei ein Bildspeicherumschalter eine Sitzung mit jedem einer Anzahl von Clients aufrechterhält, so dass eine dieser Sitzungen in Übereinstimmung mit einer jeweiligen Schutzrichtlinie aktiv ist, und wobei ein Eingabeumschalter Eingabeereignisse in Übereinstimmung mit der Schutzrichtlinie zum aktiven Client schickt;
wobei ein Zugriff auf den gemeinsamen physikalischen Speicher durch die CPU und die GPU durch individuelle Speicherverwaltungseinheiten, MMUs, vermittelt wird;
wobei der Stub-Treiber (84) mit dem GPU-Server (85) über einen Kommunikationskanal (86) kommuniziert, der durch den Hypervisor gesteuert wird;
wobei der GPU-Server (85) eingerichtet ist, eine Seitentabelle aufzubauen, die den GPU-Adressraum direkt auf den physikalischen Adressraum des Hosts abbildet; und
wobei der Stub-Treiber (84) einer virtuellen Maschine ein Client ist, der jede Abbildungsanforderung an den GPU-Server (85) weiterleitet, der wiederum eine Seitentabelle für die virtuelle Maschine im Namen des Clients aufbaut.

2. Mobiles System nach Anspruch 1, wobei entweder die Hardware oder die Software der GPU konfiguriert ist, der mindestens einen virtuellen Maschine Dienste beruhend auf einer Ressourcenzuteilung und einer Schutzrichtlinie bereitzustellen.

3. Mobiles System nach Anspruch 1 oder 2, wobei der GPU-Server konfiguriert ist, eine Quotenmechanismus einzusetzen, der die Menge eines Sekundärspeichers beschränkt, den ein Client für Seitentabellen auf der Serverseite verwenden kann.

4. Mobiles System nach einem der Ansprüche 1 bis 3, wobei der Anzeigekontrollertreiber keinen Zugriff auf die Inhalte des Bildspeichers der virtuellen Maschine hat.

5. Mobiles System nach einem der Ansprüche 1 bis 4, das ferner eine Gastseitentabelle auf der Clientseite aufweist, wobei der GPU-Server auf Anfrage eine effektive Seitentabelle für den nächsten Auftrag aus der entsprechenden Gastseitentabelle herleitet.

6. Mobiles System nach einem der Ansprüche 1 bis 5, das ferner einen Markierungsmechanismus aufweist, um es dem Benutzer des mobilen Systems zu ermöglichen, den Ursprung des Inhalts zu identifizieren.

7. Mobiles System nach Anspruch 5 oder 6, wobei die Identifizierbarkeit des vertrauenswürdigen Wegs zur virtuellen Maschine darauf beruht, ob der Eingabeumschalter und der Bildspeicherumschalter dieselbe Richtlinienentscheidungsmeldung empfangen haben oder nicht.

8. Computerimplementiertes Verfahren für ein mobiles System , das aufweist:
einen Host mit einem physikalischen Speicher und einem physikalischen Adressraum, eine zentrale Verarbeitungseinheit, CPU, einen Grafikprozessor, GPU, mit einem GPU-Server (85), einen Stub-Treiber (84), einen Bildspeicher, einen Anzeigekontroller, einen Bildschirm und eine Laufzeitumgebung, die virtuelle Maschinen unterstützt, einen Hypervisor, der die virtuelle Maschine unterstützt,
wobei der Stub-Treiber (84) mit dem GPU-Server (85) über einen Kommunikationskanal (86) kommuniziert, der durch den Hypervisor gesteuert wird,
die CPU, GPU und der Anzeigekontroller den Zugriff auf einen gemeinsamen physikalischen Speicher gemeinsam nutzen,
einen Bildspeicherumschalter, einen Eingabeumschalter, einen Eingabetreiber, einen Anzeigekontrollertreiber und einen Richtlinienmaster, der den Bildspeicherumschalter und den Eingabeumschalter synchronisiert hält;
wobei das Verfahren die Schritte aufweist:
Zuordnen eines Abschnitts des physikalischen Speichers des Hosts zu jeder virtuellen Maschine;
Paravirtualisieren der GPU zum gemeinsamen Nutzen der GPU-Hardware durch die virtuellen Maschinen;
Abbilden des physikalischen Speichers einer virtuellen Maschine auf den zugeordneten Bereich des physikalischen Speichers des Hosts;
Vermitteln eines Zugriffs auf den gemeinsamen physikalischen Speicher durch die CPU und die GPU durch individuelle Speicherverwaltungseinheiten, MMUs;
Herstellen eines vertrauenswürdigen Wegs von der virtuellen Maschine zum Bildschirm, wobei der vertrauenswürdige Weg durch die vertrauliche Eigenschaft des Schickens von Client-Bildspeichern von der virtuellen Maschine zum Bildschirm hergestellt wird, wobei ein Bildspeicherumschalter eine Sitzung mit jedem einer Anzahl von Clients aufrechterhält, so dass eine dieser Sitzungen in Übereinstimmung mit einer jeweiligen Schutzrichtlinie aktiv ist, und wobei ein Eingabeumschalter Eingabeereignisse in Übereinstimmung mit der Schutzrichtlinie zum aktiven Client schickt; und
Aufbauen durch den GPU-Server (85) einer Seitentabelle, die den GPU-Adressraum direkt auf den physikalischen Adressraum des Hosts abbildet;
wobei der Stub-Treiber (84) einer virtuellen Maschine ein Client ist, der jede Abbildungsanforderung an den GPU-Server (85) weiterleitet, der wiederum eine Seitentabelle für die virtuelle Maschine im Namen des Clients aufbaut.

9. Computerimplementiertes Verfahren nach Anspruch 8, wobei entweder Hardware oder Software der GPU konfiguriert ist, der mindestens einen virtuellen Maschine Dienste beruhend auf einer Ressourcenzuteilung und einer Schutzrichtlinie bereitzustellen.

10. Computerimplementiertes Verfahren nach Anspruch 8 oder 9, wobei der Anzeigekontrollertreiber keinen Zugriff auf die Inhalte des Bildspeichers der virtuellen Maschine hat.

11. Computerprogramm, das eingerichtet ist, das Verfahren nach einem der Ansprüche 8 bis 10 auszuführen.

## Revendications

1. Système mobile comprenant un environnement d'exécution assistant des machines virtuelles, ledit système mobile comprenant :
un hôte ayant une mémoire physique et un espace d'adresses physique, une unité centrale de traitement, CPU, un processeur graphique, GPU, avec un serveur GPU (85), un pilote de jonction (84), une mémoire d'image, un contrôleur d'affichage et un écran, le CPU, le GPU et le contrôleur d'affichage se partageant l'accès à une mémoire physique commune ;
un commutateur de mémoire d'image, un commutateur d'entrée, un pilote d'entrée, un pilote de contrôleur d'affichage, et un maître de synchronisation maintenant la synchronisation du commutateur de mémoire d'image et du commutateur d'entrée ;
au moins une instance d'une machine virtuelle, VM ;
une pluralité d'applications exécutées sur la machine virtuelle ;
un hyperviseur assistant la machine virtuelle ;
où une partie de la mémoire physique de l'hôte est affectée à chaque machine virtuelle ;
où le GPU est paravirtualisé pour partager le matériel GPU entre les machines virtuelles ;
où la mémoire physique d'une machine virtuelle est mappée à la zone affectée de la mémoire physique de l'hôte ;
où le GPU est prévu pour assurer un chemin sécurisé de la machine virtuelle à l'écran, ledit chemin sécurisé étant établi par la nature privée de mémoires d'image de client transmis de la machine virtuelle à l'écran, un commutateur de mémoire d'image maintenant une session avec chaque client d'une pluralité de clients, de telle manière qu'une de ces sessions est active conformément à une politique de protection respective, et un commutateur d'entrée transmettant des événements d'entrée au client actif conformément à ladite politique ;
où l'accès à la mémoire physique commune par le CPU et le GPU est médié par des unité de gestion de mémoire individuelles, MMU ;
où le pilote de jonction (84) communique avec le serveur GPU (85) via un canal de communication (86) commandé par l'hyperviseur ;
où le serveur GPU (85) est prévu pour construire une table de page mappant directement l'espace d'adresses de GPU à l'espace d'adresses physique de l'hôte ; et
où le pilote de jonction (84) d'une machine virtuelle qui est un client transmet chaque demande de mappage au serveur GPU (85), lequel construit de son côté une table de page pour la machine virtuelle pour le compte du client.

2. Système mobile selon la revendication 1, où soit le matériel soit le logiciel du GPU est prévu pour fournir des services à ladite au moins une machine virtuelle sur la base d'une allocation de ressources et d'une politique de protection.

3. Système mobile selon la revendication 1 ou la revendication 2, où le serveur GPU est prévu pour déployer un mécanisme de quotas pour limiter la taille de mémoire secondaire qu'un client peut utiliser pour des tables de page côté serveur.

4. Système mobile selon l'une des revendications 1 à 3, où le pilote de contrôleur d'affichage n'a pas accès aux contenus de la mémoire d'image de la machine virtuelle.

5. Système mobile selon l'une des revendications 1 à 4, comprenant en outre une table de page d'invités côté client, le serveur GPU déduisant sur demande une table de page effective pour la tâche suivante de la table de page d'invités correspondante.

6. Système mobile selon l'une des revendications 1 à 5, comprenant en outre un mécanisme d'étiquetage permettant à l'utilisateur de système mobile d'identifier l'origine du contenu.

7. Système mobile selon la revendication 5 ou la revendication 6, où l'identifiabilité du chemin sécurisé vers la machine virtuelle repose sur la réception ou la non-réception de la même notification de décision de politique par le commutateur d'entrée et le commutateur de mémoire d'image.

8. Procédé implémenté par ordinateur pour un système mobile ayant un hôte avec une mémoire physique et un espace d'adresses physique,
une unité centrale de traitement, CPU, un processeur graphique, GPU, avec un serveur GPU (85), un pilote de jonction (84), une mémoire d'image, un contrôleur d'affichage, un écran, et un environnement d'exécution assistant des machines virtuelles, un hyperviseur assistant la machine virtuelle,
le pilote de jonction (84) communiquant avec le serveur GPU (85) via un canal de communication (86) commandé par l'hyperviseur,
le CPU, le GPU et contrôleur d'affichage se partageant l'accès à une mémoire physique commune,
un commutateur de mémoire d'image, un commutateur d'entrée, un pilote d'entrée, un pilote de contrôleur d'affichage et un maître de synchronisation maintenant la synchronisation du commutateur de mémoire d'image et du commutateur d'entrée ;
ledit procédé comprenant les étapes suivantes :
affectation à chaque machine virtuelle d'une partie de la mémoire physique de l'hôte ;
paravirtualisation du GPU pour partager le matériel GPU entre les machines virtuelles ;
mappage de la mémoire physique d'une machine virtuelle à la zone affectée de la mémoire physique de l'hôte ;
médiation par des unités de gestion de mémoire individuelles, MMU, de l'accès à la mémoire physique commune par le CPU et le GPU,
création d'un chemin sécurisé de la machine virtuelle à l'écran, ledit chemin sécurisé étant établi par la nature privée de mémoires d'image de client transmis de la machine virtuelle à l'écran, un commutateur de mémoire d'image maintenant une session avec chaque client d'une pluralité de clients, de telle manière qu'une de ces sessions est active conformément à une politique de protection respective, et un commutateur d'entrée transmettant des événements d'entrée au client actif conformément à ladite politique ; et
construction, par le serveur GPU (85), d'une table de page mappant directement l'espace d'adresses de GPU à l'espace d'adresses physique de l'hôte ;
le pilote de jonction (84) d'une machine virtuelle qui est un client transmettant chaque demande de mappage au serveur GPU (85), lequel construit de son côté une table de page pour la machine virtuelle pour le compte du client.

9. Procédé implémenté par ordinateur selon la revendication 8, où soit le matériel soit le logiciel du GPU est prévu pour fournir des services à ladite au moins une machine virtuelle sur la base d'une allocation de ressources et d'une politique de protection.

10. Procédé implémenté par ordinateur selon la revendication 8 ou la revendication 9, où le pilote de contrôleur d'affichage n'a pas accès aux contenus de la mémoire d'image de la machine virtuelle.

11. Programme informatique, prévu pour exécuter le procédé selon l'une des revendications 8 à 10.
